# EUROPEAN PATENT SPECIFICATION

(11) **EP 4 266 474 B1**
(45) Date of publication and mention of the grant of the patent: **30.09.2026**
(21) Application number: 22858810.9
(22) Date of filing: 19.08.2022
(51) Int. Cl.: H01M 50/446, H01M 50/489, H01M 50/451, H01M 50/443, H01M 10/052, H01G 11/52, H01M 50/431, H01M 50/42, H01M 50/411, H01M 50/414

(54) **SEPARATION MEMBRANE FOR ELECTROCHEMICAL DEVICE AND ELECTROCHEMICAL DEVICE INCLUDING SAME**
TRENNMEMBRAN FÜR ELEKTROCHEMISCHE VORRICHTUNG UND ELEKTROCHEMISCHE VORRICHTUNG DAMIT
MEMBRANE DE SÉPARATION POUR DISPOSITIF ÉLECTROCHIMIQUE ET DISPOSITIF ÉLECTROCHIMIQUE LA COMPRENANT

(30) Priority: 19.08.2021 KR 20210109732
(43) Date of publication of application: 25.10.2023
(73) Proprietor: LG Energy Solution, Ltd., Seoul 07335 (KR)
(72) Inventor: JEONG, So-Mi, Daejeon 34122 (KR); KIM, Min-Ji, Daejeon 34122 (KR); BAE, Won-Sik, Daejeon 34122 (KR); YOON, Yeo-Ju, Daejeon 34122 (KR); LEE, So-Yeong, Daejeon 34122 (KR)
(74) Representative: Hoffmann Eitle
(86) International application number: PCT/KR2022/012454
(87) International publication number: WO 2023/022573

(56) References cited:
- JP-A- 2018 147 769
- KR-A- 20150 043 423
- KR-A- 20150 043 423
- KR-A- 20150 107 948
- KR-A- 20170 053 448
- KR-A- 20170 053 448
- KR-A- 20180 091 767
- US-A1- 2020 047 133
- AFEF JMAL AYADI ET AL: "Kaolinpoly(methacrylic) acid interaction: Polymer conformation and rheological behavior", COMPTES RENDUS CHIMIE, ELSEVIER, PARIS, FR, vol. 14, no. 5, 27 September 2010 (2010-09-27), pages 456 - 461, XP028207458, ISSN: 1631-0748, [retrieved on 20101008], DOI: 10.1016/J.CRCI.2010.09.007
- THE MINERAL ENGINEERS HFP: "PRODUKTÜBERSICHT | PRODUCT RANGE", 28 April 2025 (2025-04-28), pages 1 - 24, XP093273351, Retrieved from the Internet <URL:https://batavia.internal.epo.org/citenpl/prod/web/citenpl/citenpl.html?dossierId=3099524&dossierNumber=EP22858810&drawerId=TRI>

## Description

### Technical Field

This application claims priority based on Korean Patent Application No. 10-2021-0109732 filed on August 19, 2021.

The present disclosure relates to a separator for an electrochemical device and an electrochemical device including the same.

### Background Art

Recently, interest in energy storage technology has been increasing. Efforts for research and development of electrochemical devices are becoming more and more specific as the fields of application are expanded to mobile phones, camcorders, notebook PCs, and even the energy of electric vehicles. The field of electrochemical devices is attracting attention in this respect, the development of a secondary battery capable of charging and discharging and a lithium secondary battery having a high energy density are the focus of attention. Recently, in developing such a secondary battery, there has been a great deal of attention to ensuring safety.

In lithium secondary batteries currently being produced, porous substrates using polyolefin-based polymer resins are used as separator substrates to prevent short circuits between the cathode and anode. However, the porous substrate has a problem in that heat resistance is low because the polymer substrate shrinks or melts at high temperatures. Accordingly, when a battery rises to a high temperature due to internal/external stimulation, the possibility of a short circuit increases due to the contraction or melting of a separator, and electrical energy is rapidly discharged, resulting in the explosion or firing of the battery.

Therefore, in order to solve the above problems, a method of improving heat resistance by forming a porous coating layer in which inorganic particles and a binder polymer are mixed is widely used on at least one surface of a porous polymer substrate.

Although metal oxides or metal hydroxides such as alumina and boehmite are widely used as inorganic particles, the pore structure of the porous substrate may be damaged as the inorganic particles are compressed by pressure applied during the assembly process of the battery. In particular, when the hardness of the inorganic particles is high, damage to the porous substrate due to local pressing may increase. Accordingly, it is necessary to prevent damage to the separation membrane due to pressure.

In addition, polyolefin-based porous polymer substrates commonly used as separators exhibit extreme heat shrinkage behavior at temperatures above 150°C due to the properties of the material and the properties of the manufacturing process including elongation, causing a short circuit between the cathode and anode. Accordingly, it is necessary to prevent the separator from shrinking at high temperatures.

JP 2018 147769 and KR 2015 0043423 refer to battery separators including a coating layer including kaolin, a binder and a dispersant.

### Disclosure

### Technical Problem

Therefore, an objective of the present disclosure is to provide a separator for an electrochemical device, which can achieve thinness and weight reduction, improve heat shrinkage characteristics, and prevent damage to a separator due to pressure and an electrochemical device including the separator. It will be readily appreciated that other purposes and advantages of this disclosure can be realized by means or methods described in the claims and combinations.

### Technical Solution

The present inventors have found that the above problems are solved by the appended set of claims.

### Advantageous Effects

The separator for an electrochemical device, according to the present disclosure, can suppress shrinkage caused by high-temperature heat and exhibit an improved heat-resistant shrinkage rate. In addition, it is possible to exhibit improved compression resistance by suppressing deformation due to pressure applied during a battery assembly process.

### Description of Drawings

The drawings attached to the present specification illustrate a preferred embodiment of the present disclosure and serve to better understand the technical idea of the present disclosure together with the contents of the present disclosure, and thus the present disclosure is not limited to and interpreted. On the other hand, the shape, size, scale, or ratio of elements in the drawings included in this specification may be exaggerated to emphasize a clearer description.
FIG. 1 is a schematic diagram of an action mechanism when plate-shaped particles kaolin 1 and an ionic dispersant 2 are used in a separator according to an embodiment of the present disclosure;

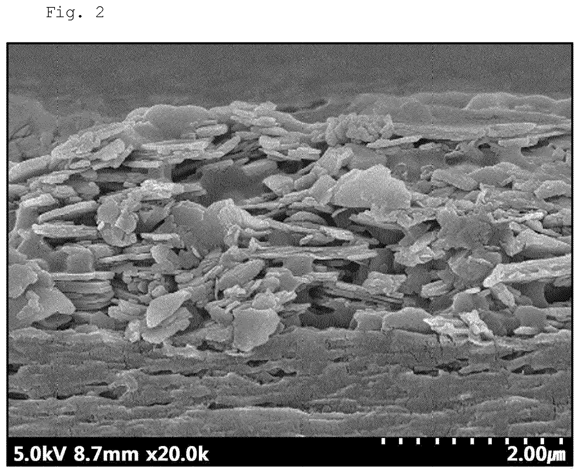

FIG. 2 shows an SEM image of a cross-section of the separator of Example 1;

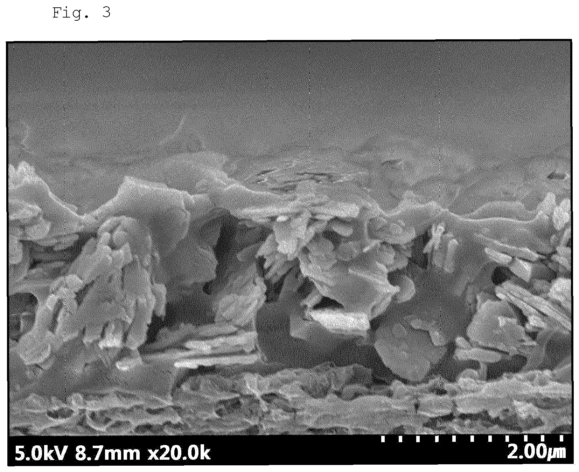

FIG. 3 shows an SEM image of a cross-section of the separator of Comparative Example 1; and

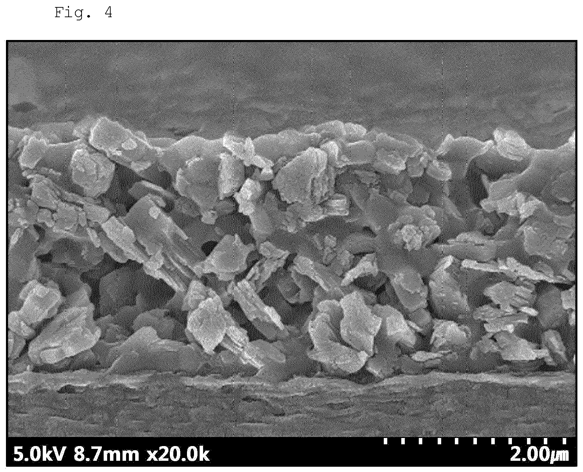

FIG. 4 shows an SEM image of a cross-section of the separator of Comparative Example 3.

### Best Mode

Hereinafter, the present disclosure will be described in detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe the disclosure in the best way possible.

Throughout this specification, when a part "includes" a certain component, it means that other components may be further included, rather than excluding other components, unless otherwise stated.

In addition, the terms "about", "substantially", etc., used throughout this specification are used as meanings at or close to the numerical values when manufacturing and material tolerances inherent in the stated meanings are presented to aid the understanding of the present application. It is used to prevent an unconscionable infringer from using the mentioned disclosure in an unreasonable way.

Throughout this specification, the description of "A and/or B" means "A or B or both".

The present disclosure relates to a separator for an electrochemical device.

In the present disclosure, the electrochemical device is a device that converts chemical energy into electrical energy by an electrochemical reaction and includes all devices that undergo an electrochemical reaction, for example, all types of primary and secondary batteries, fuel cells, solar cells, and capacitors such as supercapacitor devices. In particular, a lithium secondary battery, including a lithium metal secondary battery, a lithium ion secondary battery, a lithium polymer secondary battery, or a lithium ion polymer secondary battery among the secondary batteries, is preferable.

In the present disclosure, the separator may include a porous substrate and a porous coating layer formed on at least one side of the porous substrate.

The porous substrate refers to a substrate in which a plurality of pores is formed as a porous ion-conducting barrier that passes ions while blocking electrical contact between a cathode and an anode. The pores are mutually connected to each other so that gas or liquid can pass from one side of the substrate to the other side. As such, a porous substrate, a porous polymer film, including a thermoplastic resin, may be used from the viewpoint of imparting a shutdown function. Here, the shutdown function refers to a function preventing the thermal runaway of the battery by blocking the movement of ions by dissolving the thermoplastic resin and closing pores of the porous substrate when the battery temperature is **high.** Non-limiting examples of thermoplastic resin include polyolefin resins such as polyethylene, polypropylene, polybutylene, and polypentene. On the other hand, it is preferable that the melting point of the thermoplastic resin is less than 200°C in terms of shutdown function.

The thickness of the porous substrate is not particularly limited but is specifically in a range of 1 to 100 µm, more specifically 5 to 50 µm, or 5 to 30 µm, and the porosity of the porous substrate is also not particularly limited but is preferably in a range of 10% to 95%, or 35% to 65%.

The porous coating layer is formed on at least one side of the porous substrate and may include a binder resin, inorganic particles, and an ionic dispersant.

In the present disclosure, the porous coating layer is bound to each other by the binder resin in a state in which the inorganic particles are filled and in contact with each other, thereby forming interstitial volumes between the inorganic particles and an interstitial volume between the inorganic particles becomes an empty space and may have a structure in which pores are formed. Further, specifically in the present disclosure, the weight ratio of the inorganic particles to the binder resin in the porous coating layer may be 97: 3 to 55: 45.

In the present disclosure, the binder resin is not particularly limited as long as the binder resin may provide a binding force between inorganic particles and a binding force between a porous coating layer and an electrode. For example, the binder resin may be one or a mixture of two or more selected from the group consisting of polyvinylidene fluoride-co-hexafluoro propylene (PVDF-co-HFP), polyvinylidene fluoride-co-trichloro ethylene, polyvinylidene fluoride-co-chlorotrifluoro ethylene, poly(methyl) methacrylate, polyethyl (meth)acrylate, poly n-propyl (meth)acrylate, poly isopropyl (meth)acrylate, poly n-butyl (meth)acrylate, poly t-butyl (meth)acrylate, poly sec-butyl (meth)acrylate, polypentyl (meth)acrylate, poly-2-ethylbutyl poly (meth)acrylate, poly 2-ethylhexyl (meth)acrylate, poly n-octyl (meth)acrylate, poly isooctyl (meth)acrylate, polyisononyl (meth)acrylate, polylauryl (meth)acrylate, polytetradecyl (meth)acrylate, poly N-vinylpyrrolidinone, polyacrylonitrile, polyvinylacetate, ethylene-co-vinyl acetate , polyethylene oxide, cellulose acetate, cellulose acetate butyrate, cellulose acetate propionate, cyanoethylpullulan, cyanoethylpolyvinyl alcohol, cyanoethylcellulose, cyanoethylsucrose, pullulan, carboxyl methyl cellulose, acrylonitrile-styrene-butadiene copolymer, and polyimide.

In addition, the binder resin may be a particulate binder polymer resin. For example, the binder resin may be an acrylic copolymer, styrene-butadiene rubber, or a mixture of two or more of these, and the acrylic copolymer may include a copolymer of ethylhexyl acrylate and methyl methacrylate, polymethyl methacrylate, polyethylhexyl acrylate, polybutyl acrylate, polyacrylonitrile, a copolymer of butylacrylate and methylmethacrylate, or a mixture of two or more thereof.

In the present disclosure, the inorganic particles include plate-shaped particles A.

The plate-like particles A have a Mohs hardness of about 3 or less and a density of about 3 g/cm 3 or less, and preferably have a Mohs hardness of about 2.3 to 2.7 and a density of about 2.5 to 2.8 g/cm³. By including the plate-shaped particles A having the Mohs hardness and density suggested above, the separator can be formed with a lighter and thinner thickness than conventional separators and exhibits high packing density, thereby exhibiting excellent heat resistance safety. In addition, deformation of the separator is relieved by pressure applied during the assembly process of the battery so that excellent compression resistance can be exhibited.

In the above, the aspect ratio of the plate-shaped particles A is in a range of 5 to 100, preferably 5 to 30, and the aspect ratio is defined as [length in the major axis direction]/[width in the direction perpendicular to the major axis direction]. When the aspect ratio is greater than the above range, the path through which lithium ions move is lengthened, thereby increasing the resistance of the separator. In addition, the plate-shaped particles A may be arranged or stacked in a direction (plane direction) parallel to the porous coating layer.

The plate-shaped particles A include kaolin.

Kaolin is represented by the chemical composition of Al₂O₃.2SiO₂.2H₂O, and there are general kaolin, meta kaolin, and calcined kaolin. Kaolin herein refers to general kaolin containing a hydroxyl group (-OH group) on the surface.

The meta-kaolin is calcined at a temperature of about 500°C or higher to almost remove hydroxyl groups on the surface, and the calcined kaolin is calcined at a temperature of about 900°C or higher to completely remove hydroxyl groups on the surface. In the present disclosure, kaolin including a hydroxyl group on the surface is preferred, and meta kaolin and/or fired kaolin are not preferred.

The combination of a plate-shaped general kaolin and an ionic dispersant to be described below shows the effect of suppressing shrinkage due to high-temperature heat and suppressing deformation due to pressure. This is because when kaolin having a hydroxyl group (-OH group) on the surface and an ionic dispersant are used together, the plate-shaped kaolin is arranged in the plane direction so that even when pressure is applied, damage to the porous substrate by kaolin does not appear.

However, when meta-kaolin or calcined kaolin that has undergone a calcining at a high temperature is used together with an ionic dispersant, the charge characteristics of the particles are changed, and thus the meta-kaolin or calcined kaolin cannot be arranged in the plane direction so that the desired effect in this disclosure does not appear. In addition, even if metal oxides such as alumina and boehmite are used as inorganic particles commonly used in the art when the porous substrate is compressed by the inorganic particles due to the pressure applied during the assembly process of the battery, the pore structure of the porous substrate is damaged, or the separator is deformed by the pressure so that the desired effect in the present disclosure does not appear.

In addition, when general kaolin and an ionic dispersant to be described later are used together in the present disclosure, high packing density can be exhibited in the porous coating layer. In particular, in the present disclosure, the separator can exhibit a packing density of about 1.1 to 1.5 g/cm³ or about 1.1 to 1.3 g/cm³ while including kaolin, which is a plate-shaped particles having a density of about 3 g/cm³ or less, preferably about 2.5 to 2.8 g/cm³. In the present disclosure, the packing density can be calculated as the weight per unit volume of the porous coating layer.

In the present disclosure, the effect of suppressing shrinkage by high-temperature heat and suppressing deformation by pressure can be determined by the degree of a planar arrangement of the plate-shaped particles. The degree of a planar arrangement of the plate-shaped particles tends to increase in proportion to the ratio of the packing density of the porous coating layer to the density of the plate-shaped particles ([packing density]/[density]). In general, when high-density particles are included in the porous coating layer, the packing density tends to be high due to the high density of the particles. Therefore, it cannot be determined that the plate-shaped particles are arranged in the plane direction only with the packing density of the porous coating layer, and the inherent density of the plate-shaped particles should be considered. In the present disclosure, kaolin particles having a relatively small density are included, but the kaolin particles are arranged in the plane direction so that a high packing density can be exhibited. In this case, [packing density]/[density] may be 0.45 to 0.80, preferably 0.46 or more. Accordingly, the separator may be formed to be lighter and thinner than the conventional separator and may exhibit high packing density, thereby exhibiting excellent heat resistance safety. When the plate-shaped particles have an aspect ratio exceeding the aforementioned aspect ratio range, the plate-shaped particles may have a [packing density]/[density] ratio greater than the above range, and in this case, a path through which lithium ions move is lengthened to increase the resistance of a separator.

According to one embodiment of the present disclosure, the plate-shaped particles A may be included in an amount of 30% by weight or more or 50% by weight or more based on 100% by weight of the inorganic particles in order to improve the heat resistance of the separator.

In the present disclosure, the inorganic particles may include particles other than plate-shaped particle A, and the inorganic particles other than plate-shaped particle A are not particularly limited as long as the inorganic particles are electrochemically stable. For example, inorganic particles other than particle A are not particularly limited as long as oxidation and/or reduction reactions do not occur in the operating voltage range (e.g., 0 to 5V based on Li/Li⁺) of the electrochemical device to which the inorganic particles are applied. Non-limiting examples include ZrO₂, BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), HfO₂, SrTiO₃, SnO₂, CeO₂, MgO, NiO, CaO, ZnO, ZrO₂, Y₂O₃, Al₂O₃, TiO₂, AlOOH, Al(OH)₃, SiC, or a mixture thereof. Meanwhile, in addition to this, lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂-based glass (LiₓSi_{y}S_{z}, 0<x<3, 0<y<2, 0<z<4), P₂S₅-based glass (LiₓP_{y}S_{z}, 0<x<3, 0<y<3, 0<z<7) or two or more inorganic particles among them may be further included.

The ionic dispersant is added to disperse inorganic particles to prevent aggregation of solids during the formation of a porous coating layer. By using an ionic dispersing agent as a dispersing agent, the plate-shaped particles A included in the porous coating layer can be arranged in the plane direction. Therefore, it is possible to exhibit an effect of suppressing shrinkage due to high-temperature heat and suppressing deformation due to pressure. In the present disclosure, the planar arrangement means that the wide surface of the plate-shaped particles A is arranged in a direction substantially parallel to the surface of the porous substrate.

In the present disclosure, any ionic dispersant capable of arranging the plate-shaped particles A in the plane direction may be used without limitation.

As the plate-shaped particles A include kaolin, an anionic surfactant is used as the ionic dispersant.

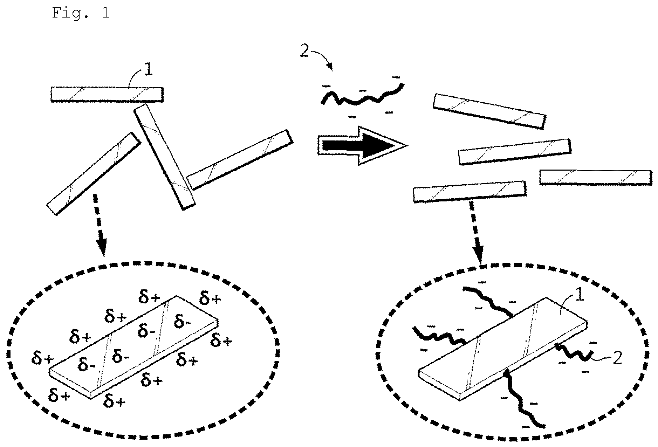

FIG. 1 is a schematic diagram of an action mechanism when plate-shaped particles kaolin 1 and an ionic dispersant 2 are used in a separator. For example, the mechanism of action when an anionic surfactant is used as an ionic dispersant is described.

The surface portion of kaolin exhibits approximately a negative charge (δ-), and the edge portion exhibits approximately a positive charge (δ+). Accordingly, in the absence of an anionic surfactant, since the negative charge on the surface portion of kaolin and the positive charge on the edge portion interact with each other, kaolin cannot be arranged in the plane direction. However, when kaolin and an anionic surfactant are used together, the anionic surfactant interacts with the positive charge of the edge portion of the kaolin so that the anionic surfactant is adsorbed to the edge portion of the kaolin surface. As a result, the total negative charge on the surface of kaolin increases, and the interaction between the negative charge on the surface portion of kaolin and the positive charge on the edge portion is suppressed so that the kaolin is arranged in the plane direction.

Ordinary kaolin, which is a plate-shaped particle, has a large charge difference between the surface portion and the edge portion compared to other kaolin, such as meta-kaolin and calcined kaolin, or other plate-shaped metal hydroxides such as aluminum hydroxide and magnesium hydroxide, and thus exhibits a relatively excellent planar arrangement when using an ionic dispersant. This may result in a relatively higher [packing density]/[density] ratio.

The ionic dispersant is any one of ammonium polymethacrylate, ammonium polyacrylate, sodium polymethacrylate, and sodium polyacrylate.

The ionic dispersant may be included in an amount of 0.3% to 5% by weight or 0.5% to 3% by weight, based on 100% by weight of the inorganic particles, for a planar arrangement of the plate-shaped particles A.

Meanwhile, in the present disclosure, the separator may further include other additives, such as a flame retardant, as necessary, in addition to the aforementioned binder resin, inorganic particles, and ionic dispersant as components of the porous coating layer.

The separator, according to an embodiment of the present disclosure, may be prepared by preparing a composition for forming a porous coating layer including inorganic particles, a binder resin, and an ionic dispersant, coating at least one surface of a porous substrate with the composition, and drying the composition.

First, the composition for forming the porous coated layer may be prepared by preparing a polymer solution in which a binder resin is dissolved in a solvent and then adding inorganic particles to the polymer solution and dispersing the inorganic particles. The inorganic particles may be added in a state in which the inorganic particles are pre-crushed to have a predetermined average particle diameter or the inorganic particles may be crushed and dispersed while controlling the inorganic particles to have a predetermined particle diameter using a ball mill method or the like. On the other hand, in one embodiment of the present disclosure, it is also preferable that the concentration of the solid content, excluding the solvent in the dispersion, is controlled in the range of 20% to 70% by weight.

Non-limiting examples of the solvent used at this time may include one compound selected from acetone, tetrahydrofuran, methylene chloride, chloroform, dimethylformamide, N-methyl-2-pyrrolidone, methyl ethyl ketone, cyclohexane, methanol, ethanol, isopropyl alcohol, propanol, and water, or a mixture of two or more compounds.

A method of coating the porous substrate with the composition for forming the porous coating layer is not particularly limited, but it is preferable to use a slot coating or dip coating method. In slot coating, a composition supplied through a slot die is applied to the entire surface of a substrate, and the thickness of the coating layer can be adjusted according to the flow rate supplied by a metering pump. In addition, dip coating is a method of coating a substrate by immersing the substrate in a tank containing a composition, and the thickness of the coating layer may be adjusted according to the concentration of the composition and the speed at which the substrate is taken out of the composition tank, and may be measured after being immersed through a Mayer bar or the like for more accurate coating thickness control.

By drying the porous substrate coated with the composition for forming a porous coating layer using a dryer such as an oven, an inorganic coating layer is formed on the surface of the porous substrate. The porous coating layer may be formed on at least one side or both sides of the porous substrate.

The thickness of the separator, according to the present disclosure, is not particularly limited but may be in the range of 5 to 50 µm or less, preferably in the range of 5 to 20 µm or 10 to 16 µm to exhibit improved insulation and heat resistance stability.

An electrochemical device, according to the present disclosure, includes an anode, a cathode, and a separator interposed between the anode and the cathode, and the separator is the separator according to one embodiment of the present disclosure described above.

The electrode to be applied together with the separator of the present disclosure is not particularly limited, and an electrode active material may be prepared in a form bound to an electrode current collector according to a conventional method known in the art.

Non-limiting examples of the cathode active material among the electrode active materials may include a conventional cathode active material that may be used in a cathode of a conventional lithium secondary battery, and particularly, lithium manganese oxide, lithium cobalt oxide, lithium nickel oxide, lithium iron oxide, or a combination thereof may be used.

Non-limiting examples of the anode active material may include a conventional anode active material that may be used in the anode of a conventional lithium secondary battery, and particularly, lithium metal or a lithium alloy, lithium adsorption materials such as carbon, petroleum coke, activated carbon, graphite, or other carbons may be used.

Non-limiting examples of the cathode current collector may include a foil made of aluminum, nickel or a combination thereof, and non-limiting examples of the anode current collector may include a foil made of copper, gold, nickel, or a copper alloy, or a combination thereof.

The electrolyte that can be used in the electrochemical device of the present disclosure is a salt having the same structure as A⁺B⁻, and A⁺ includes ions formed of alkali metal cations such as Li⁺, Na⁺, K⁺, or a combination thereof, or B⁻ includes PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻, or a combination thereof. In the electrolyte, the salt may be dissolved or dissociated in an organic solvent or an organic solvent consisting of a mixture thereof, including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma-butyrolactone (γ-butyrolactone), but is not limited thereto.

The electrolyte injection may be performed at an appropriate stage in the battery manufacturing process according to the manufacturing process and required physical properties of the final product. That is, the electrolyte injection may be applied before assembling the battery or in the final stage of assembling the battery.

In addition, the present disclosure provides a battery module, including a battery including the electrode assembly as a unit cell, a battery pack including the battery module, and a device including the battery pack as a power source. Specific examples of the device include a power tool powered by a battery motor; electric vehicles, including electric vehicles (EVs), hybrid electric vehicles (HEVs), plug-in hybrid electric vehicles (PHEVs), and the like; electric two-wheeled vehicles, including electric bicycles (E-bikes) and electric scooters (E-scooter); electric golf carts; and a power storage system, but is not limited thereto.

Hereinafter, examples will be given to describe the present disclosure in detail. However, the embodiments according to the present disclosure may be modified in various other forms, and the scope of the present disclosure should not be construed as being limited to the embodiments described below. The embodiments of the present disclosure are provided to more completely explain the present disclosure to those of ordinary skilled in the art.

### Example

Separators of Examples and Comparative Examples were prepared according to the following method.

### Example 1

1) A porous polyethylene film (thickness: 9 µm, porosity: 45%) was prepared as a porous polymer substrate.
2) Next, 20 g of plate-shaped kaolin (aspect ratio 20), 0.3 g of ionic dispersant (ammonium polyacrylate), and 20 g of 0.5 mm zirconia beads were added to 30 g of a solvent mixed with water: ethanol at a 95:5 ratio and stirred for 2 hours with a paint shaker to prepare an inorganic dispersion.
3) Subsequently, 1 g of 40% solid acrylic binder (JSR, TRD202A) and 10 g of 40% water-dispersed acrylic particulate binder (APAC AP-0821, particle diameter 350 nm) were added to the inorganic dispersion and shaken to prepare a coating slurry.
4) The coating slurry was filtered through a 200-mesh filter, coated on one side of a polyethylene porous film using a bar coater, and then dried with a dryer. The opposite side of a polyethylene porous film was also coated once more under the same conditions to prepare a double-sided coated separator.

The results according to this are shown in Table 2.

### Example 2 and Comparison Examples 1 to 4

As shown in Table 1 below, a separator was prepared in the same manner as in Example 1, except that the types of inorganic materials and dispersants were changed. The results according to this are shown in Table 2.

**[Table 1]**

| | Inorganic materials | | | | Dispersant |
|---|---|---|---|---|---|
| | Type | Shape | Densit y (g/cm³) | Hardnes s (Mohs) | |
| Example 1 | Kaolin | Plate-shaped | 2.6 | 2.5 | Ammonium polyacrylat e (Ionic dispersant) |
| Example 2 | Kaolin | Plate-shaped | 2.6 | 2.5 | Sodium polyacrylate (Ionic dispersant) |
| Comparative Example 1 | Calcined kaolin | Plate-shaped | 2.4 | 3 | Ammonium polyacrylate (Ionic dispersant) |
| Comparative Example 2 | Kaolin | Plate-shaped | 2.6 | 2.5 | Polyvinyl alcohol (Non-ionic dispersant) |
| Comparative Example 3 | Aluminum hydroxide (Al(OH)₃ ) | Plate-shaped | 2.4 | 3 | Ammonium polyacrylate (Ionic dispersant) |
| Comparative Example 4 | Alumina (Al₂O₃) | Amorphous -shaped | 3.95 | 9 | Ammonium polyacrylate (Ionic dispersant) |

**[Table 2]**

| | Separator properties | | | | | Compression resistance | |
|---|---|---|---|---|---|---|---|
| | Thickness (um) | Packing density (Packing density) (g/cm³) | Packing density /Density | Air permeability (sec/100cc) | Heat shrinkage rate (MD direction/TD direction) (%) | Separat or thickness after compression (um) | Air permeability after compression (sec/100cc) |
| Example 1 | 15.5 | 1.2 | 0.46 | 173 | 1/1 | 14.2 | 232 |
| Example 2 | 15.4 | 1.2 | 0.46 | 154 | 2/2 | 14.3 | 203 |
| Comparative Example 1 | 15.2 | 1.0 | 0.42 | 125 | 15/16 | 13.3 | 239 |
| Comparative Example 2 | 15.7 | 1.0 | 0.38 | 118 | 18/17 | 13.2 | 251 |
| Comparative Example 3 | 15.1 | 1.0 | 0.42 | 121 | 16/14 | 12.8 | 265 |
| Comparative Example 4 | 15.6 | 1.6 | 0.41 | 139 | 10/11 | 12.3 | 321 |

As can be seen from Table 2, when comparing Examples 1 and 2 and Comparative Examples 1 to 4, the thickness of the prepared separator was equal or similar, but since deformation due to pressure occurred larger in Comparative Examples 1 to 4 than in Examples 1 and 2, it was confirmed that the difference was large between the thickness of the separator after compression and the thickness of the manufactured separator.

In addition, it can be confirmed that Examples 1 and 2 exhibit higher packing densities than Comparative Examples 1 to 3. For reference, Comparative Example 4 shows a higher packing density than Example 1, but shows a high packing density due to high alumina particles, and it is confirmed that the [packing density]/[density] ratio is relatively low.

In addition, when the air permeability of the separation membrane was measured before compression, Examples 1 and 2 showed greater air permeability, but after compression, since Comparative Examples 1 to 4 showed greater air permeability than in the Examples, it was confirmed that the air permeability of Comparative Examples 1 to 4 was decreased due to compression.

In addition, it was confirmed that Examples 1 and 2 had lower heat shrinkage rates in the MD and TD directions of the separators prepared than those of Comparative Examples 1 to 4.

### Evaluation of the physical properties of the separator

Evaluation of the physical properties of the separator prepared in Examples and Comparative Examples was performed in the following manner.

### (1) Thickness

The thickness of the separator was measured using a thickness meter (Mitutoyo, VL-50S-B).

### (2) Measurement of air permeability

According to JIS P-8117, air permeability was measured using a Gurley-type air permeability meter. In this case, the time for 100 cc of air to pass through a diameter of 28.6 mm and an area of 645 mm² was measured.

### (3) Evaluation method of heat shrinkage rate

The separator cut into 5x5 cm was stored in a 135°C convection oven for 30 minutes, and then the changed lengths were measured in the MD direction and the TD direction, respectively.

Heat shrinkage rate (%) = {(Dimension before shrinkage - Dimension after shrinkage)/Dimension before shrinkage} X 100

### (4) Compression separator sample preparation

Release PET film cut into 10x10 cm was laminated on top and bottom of the separator cut into 5X5 cm. At this time, the releasing surface of the release PET film was brought into contact with the separator. A compressed separator sample was prepared by hot pressing the separator laminated with PET film for 10 seconds at a temperature of 70°C and a pressure of 5 MPa.

## Claims

1. A separator for an electrochemical device, the separator comprising a porous substrate and a porous coating layer formed on at least one side of the porous substrate, wherein the porous coating layer comprises a binder resin, inorganic particles, and an ionic dispersant, the inorganic particles comprise plate-shaped particles A having a Mohs hardness of 3 or less and a density of 3 g/cm³ or less, and the plate-shaped particles A comprise kaolin,
wherein the ionic dispersant is any one of ammonium polymethacrylate, ammonium polyacrylate, sodium polymethacrylate, or sodium polyacrylate.

2. The separator of claim 1, wherein the kaolin contains a hydroxyl group on the surface thereof.

3. The separator of claim 1, wherein the kaolin is contained in an amount of 50% by weight or more based on 100% by weight of the inorganic particles.

4. The separator of claim 1, wherein the ionic dispersant is contained in an amount of 0.3% to 5% by weight based on 100% by weight of inorganic particles.

5. The separator of claim 1, wherein the plate-shaped particle A has an aspect ratio in a range of 5 to 30, and the aspect ratio is defined as [length in the major axis direction]/[width in a direction perpendicular to the major axis direction].

6. The separator of claim 1, wherein the ratio of the packing density of the porous coating layer to the density of the plate-shaped particles A is 0.45 to 0.8 wherein the packing density is defined as a weight per unit volume of the porous coating layer.

7. An electrochemical device comprising a cathode, an anode, and a separator interposed between the cathode and the anode,
wherein the separator is the separator of any one of claims 1 to 6.

8. The electrochemical device of claim 7, wherein the electrochemical device is a lithium secondary battery.

## Patentansprüche

1. Separator für eine elektrochemische Vorrichtung, der Separator umfassend ein poröses Substrat und eine poröse Beschichtung, die auf mindestens einer Seite des porösen Substrats ausgebildet ist, worin die poröse Beschichtung ein Bindemittelharz, anorganische Teilchen und ein ionisches Dispergiermittel umfasst, die anorganischen Teilchen plättchenförmige Teilchen A mit einer Mohs-Härte von 3 oder weniger und einer Dichte von 3 g/cm³ oder weniger umfassen und die plättchenförmigen Teilchen A Kaolin umfassen,
worin das ionische Dispergiermittel eines von Ammoniumpolymethacrylat, Ammoniumpolyacrylat, Natriumpolymethacrylat oder Natriumpolyacrylat ist.

2. Separator gemäß Anspruch 1, worin das Kaolin eine Hydroxygruppe auf der Oberfläche davon enthält.

3. Separator gemäß Anspruch 1, worin das Kaolin in einer Menge von 50 Gew.-% oder mehr, basierend auf 100 Gew.-% der anorganischen Teilchen, enthalten ist.

4. Separator gemäß Anspruch 1, worin das ionische Dispergiermittel in einer Menge von 0,3 Gew.-% bis 5 Gew.-%, basierend auf 100 Gew.-% der anorganischen Teilchen, enthalten ist.

5. Separator gemäß Anspruch 1, worin das plättchenförmige Teilchen A ein Aspektverhältnis in einem Bereich von 5 bis 30 aufweist und das Aspektverhältnis definiert ist als [Länge in Richtung der Hauptachse]/[Breite in einer Richtung senkrecht zur Hauptachse].

6. Separator gemäß Anspruch 1, worin das Verhältnis der Packungsdichte der porösen Beschichtung zur Dichte der plättchenförmigen Teilchen A 0,45 bis 0,8 beträgt, worin die Packungsdichte als Gewicht pro Einheitsvolumen der porösen Beschichtung definiert ist.

7. Elektrochemische Vorrichtung, umfassend eine Kathode, eine Anode und einen zwischen der Kathode und der Anode geschalteten Separator,
worin der Separator der Separator gemäß einem der Ansprüche 1 bis 6 ist.

8. Elektrochemische Vorrichtung gemäß Anspruch 7, worin die elektrochemische Vorrichtung eine Lithiumsekundärbatterie ist.

## Revendications

1. Séparateur pour un dispositif électrochimique, le séparateur comprenant un substrat poreux et une couche de revêtement poreuse formée sur au moins un côté du substrat poreux, dans lequel la couche de revêtement poreuse comprend une résine liante, des particules inorganiques et un dispersant ionique, les particules inorganiques comprennent des particules A en forme de plaque présentant une dureté de Mohs de 3 ou moins et une densité de 3 g/cm³ ou moins, et les particules A en forme de plaque comprennent du kaolin,
dans lequel le dispersant ionique est l'un quelconque parmi le polyméthacrylate d'ammonium, le polyacrylate d'ammonium, le polyméthacrylate de sodium ou le polyacrylate de sodium.

2. Séparateur selon la revendication 1, dans lequel le kaolin contient un groupe hydroxyle à sa surface.

3. Séparateur selon la revendication 1, dans lequel le kaolin est contenu en une quantité de 50 % en poids ou plus sur la base de 100 % en poids des particules inorganiques.

4. Séparateur selon la revendication 1, dans lequel le dispersant ionique est contenu en une quantité de 0,3 % à 5 % en poids sur la base de 100 % en poids de particules inorganiques.

5. Séparateur selon la revendication 1, dans lequel la particule A en forme de plaque présente un rapport d'aspect dans une plage de 5 à 30, et le rapport d'aspect est défini comme étant [longueur dans la direction du grand axe]/[largeur dans une direction perpendiculaire à la direction du grand axe].

6. Séparateur selon la revendication 1, dans lequel le rapport de la densité de tassement de la couche de revêtement poreuse à la densité des particules A en forme de plaque est de 0,45 à 0,8, dans lequel la densité de tassement est définie comme un poids par unité de volume de la couche de revêtement poreuse.

7. Dispositif électrochimique comprenant une cathode, une anode et un séparateur interposé entre la cathode et l'anode, dans lequel le séparateur est le séparateur selon l'une quelconque des revendications 1 à 6.

8. Dispositif électrochimique selon la revendication 7, dans lequel le dispositif électrochimique est une batterie secondaire au lithium.
